**Europäisches Patentamt**

**European Patent Office**

**Office européen des brevets**

(19)

(11) Publication number : **0 366 370 B1**

(12)

# EUROPEAN PATENT SPECIFICATION

(45) Date of publication of patent specification :
**08.02.95 Bulletin 95/06**

(51) Int. Cl.⁶ : **G11B 5/706**

(21) Application number : **89310817.5**

(22) Date of filing : **20.10.89**

(54) **Plate-like composite oxide fine particles containing mainly Ba and Fe, and a process for producing the same.**

(30) Priority : **24.10.88 JP 268948/88**

(43) Date of publication of application :
**02.05.90 Bulletin 90/18**

(45) Publication of the grant of the patent :
**08.02.95 Bulletin 95/06**

(84) Designated Contracting States :
**DE FR GB NL**

(56) References cited :
**EP-A- 0 164 251**
**EP-A- 0 232 131**
**EP-A- 0 232 132**
**EP-A- 0 272 148**

(73) Proprietor : **TODA KOGYO CORP.**
**7-1 Yokogawa-Shinmachi**
**Nishi-ku**
**Hiroshima-shi Hiroshima-ken (JP)**

(72) Inventor : **Nishi, Masatoshi**
**2-14-3 Funairi-Minami**
**Naka-ku**
**Hiroshima-shi Hiroshima-ken (JP)**
Inventor : **Fujita, Ryuji**
**1-3-302 Maruishi**
**Ono-cho**
**Saeki-gun**
**Hiroshima-shi Hiroshima-ken (JP)**
Inventor : **Nagai, Norimichi**
**1-11-25 Inokuchidai**
**Nishi-ku**
**Hiroshima-shi Hiroshima-ken (JP)**

(74) Representative : **Woods, Geoffrey Corlett et al**
**J.A. KEMP & CO.**
**14 South Square**
**Gray's Inn**
**London WC1R 5LX (GB)**

## Description

The present invention relates to plate-like composite oxide fine ferrite particles, to a process for producing such particles and to magnetic media incorporating the particles.

Recently, ferromagnetic non-acicular particles having an adequate coercive force, a high magnetization, appropriate average particle size and excellent temperature, dependence of the coercive force (temperature stability) as a magnetic material for recording, especially a magnetic material for perpendicular magnetic recording, have been demanded as described, for instance, in JP-A-55-86103 (1980).

Generally, plate-like ferrite particles containing Ba are well known as ferromagnetic non-acicular particles.

As a method for producing plate-like ferrite fine particles containing Ba, a method comprising heat-treating co-precipitates formed from a ferric salt and a Ba salt in an aqueous alkaline solution is known (this method is hereinafter referred to as a "co-precipitation method").

The plate-like ferrite fine particles containing Ba for magnetic recording are required to have an appropriate average particle size and magnetic properties such as an appropriate coercive force and a high magnetization, as well as excellent temperature dependence of the coercive force (temperature stability).

It is desired that the size of the plate-like ferrite particles containing Ba for magnetic recording is as small as possible, especially not greater than 0.3 μm in average diameter.

This fact is mentioned, for instance, in JP-A-56-125219 (1981) which states: "The utility of the perpendicular magnetic recording to longitudinal recording becomes manifest when the recording wavelength is in the region not more than 1 μm. For performing sufficient recording and reproduction in this wavelength region, it is desirable that the ferrite particles are not greater than 0.3 μm in average diameter. However, if the average particle size becomes smaller than about 0.01 μm, it tends not to exhibit the desired ferromagnetism. Therefore, it is required that an average particle size is in the range of about 0.01 to 0.3 μm."

It is usually required that the plate-like ferrite fine particles containing Ba for magnetic recording have a coercive force of about 300 to 2,000 Oe. In order to reduce the coercive force of the plate-like ferrite fine particles containing Ba produced by the co-precipitation method to an appropriate coercive force, it has been proposed to substitute part of the Fe (III) in ferrite with tetravalent metallic ions, for example of Ti, and divalent metallic ions, for example of Co, Mn and Zn, thereby obtaining plate-like composite ferrite fine particles containing Ba.

It is desired that the magnetization of the particles is as high as possible. This is described, for instance, in JP-A-56-149328 (1981) which states: "Magnetoplumbite ferrite used as a material for magnetic recording media is required to have as high saturation magnetization as possible."

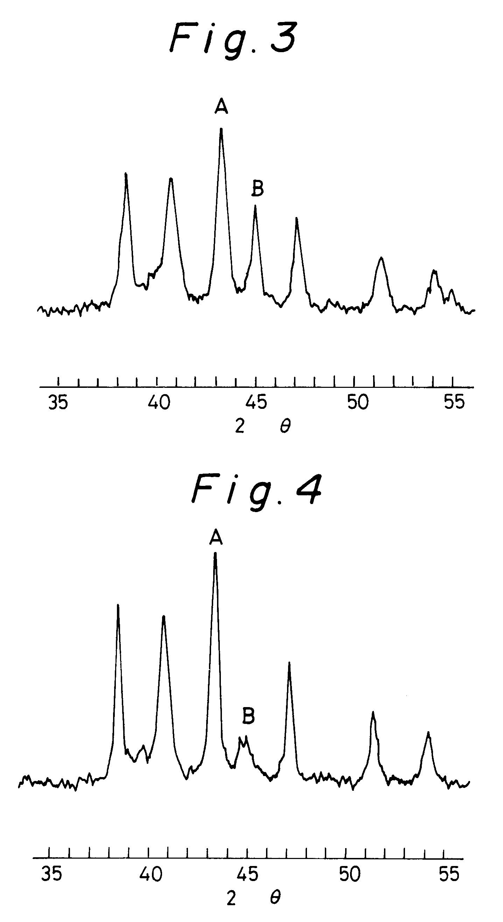

The coercive force of plate-like ferrite particles containing Ba, as seen, for instance, from Fig. 4 on page 1,123 of IEEE TRANSACTIONS ON MAGNETICS, MAG-18, No. 6, increases with rise in temperature, and thus the temperature dependence of magnetic properties of the particles, especially the coercive force (hereinafter referred to as "temperature stability") is poor. Improvement of the temperature stability has been required.

Plate-like composite ferrite fine particles containing Ba having a high magnetization, an appropriate coercive force and excellent temperature stability are most acutely required at present, but it is hardly possible with the afore-mentioned co-precipitation method to obtain plate-like Ba-containing ferrite fine particles having all of the above-mentioned properties.

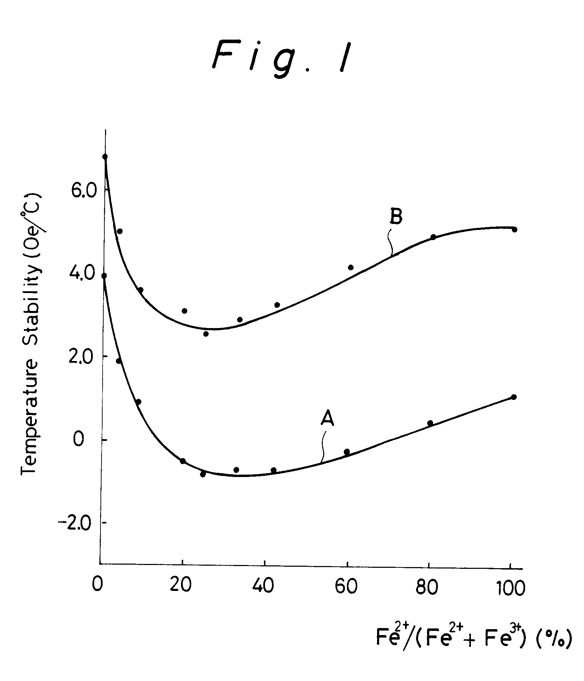

For instance, in the case of plate-like composite ferrite fine particles containing Ba as well as Co (II) and Ti (IV) obtained by adding Co (II) and Ti (IV) to form co-precipitates for reducing the coercive force, and then heat-treating the resultant co-precipitates, it is possible to control the coercive force to be an appropriate value with small amounts of the added substances because of their large effect of reducing the coercive force, so that the decrease of magnetization by the additives is small. As a result, the resultant particles have a relatively large magnetization such as around 50 to 60 emu/g, but the temperature stability thereof is quite unsatisfactory (the temperature dependence of the coercive force is from +2.5 to 6.0 Oe/°C in the specified temperature range). Thus, the coercive force of plate-like composite ferrite fine particles containing Ba plus Co (II) and Ti (IV) increases as the temperature rises. This phenomenon can be also presumed from Fig. 1 on page 1,459 of Journal of Magnetism and Magnetic Materials, No. 15 - 18, 1980.

In the case of plate-like composite ferrite fine particles containing Ba plus Ni (II) and Ti (IV) or Zn (II) and Ti (IV), obtained by adding Ni (II) or Zn (II) and Ti (IV) in forming co-precipitates for lowering the coercive force, and then heat-treating the resultant co-precipitates, it is necessary to add a large amount of Ni (II) and Ti (IV) or Zn (II) and Ti (IV) for controlling the coercive force to an appropriate amount because of the small effect of the added substances in reducing coercive force, and accordingly the obtained particles have notably lowered magnetization. Thus they have a low magnetization such as about 47 emu/g at most. It can be assumed from Fig. 1 in the Journal of Magnetism and Magnetic Materials that these particles have a relatively good temperature stability in comparison with the plate-like composite ferrite fine particles containing Ba plus Co (II) and TI (IV), but they still cannot be deemed to have satisfactory temperature stability as the temperature dependence of the coercive force is +1.0 to +3.0 Oe/°C.

Various methods, such as those described in JP-A-61-152003 (1986), JP-A-62-132732 (1987) and JP-A-63-164203 (1988), have been proposed for improving the temperature stability of plate-like composite ferrite fine particles containing Ba and other elements such as Co (II) and Ti (IV) for reducing the coercive force.

According to the method of JP-A-61-152003, plate-like composite ferrite fine particles containing Ba and which also contain elements such as Co (II) and Ti (IV) for reducing the coercive force are subjected to a heat-treatment in a reducing atmosphere at 300 - 700°C, but in this method, as a result of the heat-treatment, the coercive force is increased to more than twice the value before the heat-treatment, thereby making it difficult to control the coercive force to an appropriate amount.

In the method of JP-A-62-132732, plate-like composite ferrite fine particles containing Ba are formed such that their average diameter is not more than 1.0 μm, the thickness in the c-axis direction is not more than 0.2 μm and the plate ratio (average diameter of plate surface : thickness in the c-axis direction) is not more than 5:1. This method has the disadvantage that the improvement of temperature stability is subject to restrictions by the particle shape.

The method of JP-A-63-164203 comprises adding at least one metal selected from Ni, Cu, Zn and Mg in addition to the elements for reducing the coercive force in producing the plate-like composite ferrite fine particles containing Ba. According to this method, because of the use of large amounts of additives, the obtained particles have necessarily lowered magnetization and are unable to have a high magnetization.

JP-B-49-23676 (1974) discloses that a ferrous salt is used in the co-precipitation. The object of this process is to provide magnetoplumbite type ferrite particles containing Ba for sintered magnets which are required to have a high coercive force of 4,000 to 5,300 Oe taking no notice of temperature stability. The amount of ferrous salt relative to the sum of ferrous and ferric salts in the co-precipitation is about 20 to 23% (calculated as Fe(II)/[Fe(II) + Fe(III)]).

JP-A-63-214,914 (1988) discloses an improvement of the temperature stability of plate-like composite ferrite particles containing Ba by adding a ferrous salt in an autoclaving method and heat-treating the resultant product in an inert atmosphere. The plate-like composite ferrite particles containing Ba obtained according to this process contain Fe(II).

Thus, it has been strongly requested to establish a process which is capable of improving the temperature stability alone in a way free of restrictions by particle shape or magnetic properties such as magnetization and coercive force while maintaining an adequate coercive force and the high magnetization of plate-like composite ferrite fine particles containing Ba.

EP-A-272,148 discloses Ba-containing plate-like magnetoplumbite-type ferrite particles suitable for magnetic recording containing ions of one group (II) metal selected from Ni and Zn and ions of one group (IV) metal selected from Ti, Sn and Zr, and which have zinc incorporated as a solid solution close to the particle surface and exhibit a change in coercive force at a temperature of from -20 to 120°C of from -39.8 to +39.8 $Am^{-1}$/°C (-0.5 to +0.5 Oe/°C).

EP-A-232,131 discloses plate-like barium ferrite particles with a solid solution of zinc on the surface thereof which have an average particle diameter of between 0.03 and 0.1 μm, a coercive force of $2.39 \times 10^4$ to $11.94 \times 10^4$ $Am^{-1}$ (300 to 1500 Oe) and a magnetization of not less than 57 $Am^2$/kg (57 emu/g), and which have the formula $BaO.n[(Fe_{1-x-y}, Co_xTi_y)_2O_{3-x+y}]$ wherein x and y are from 0.02 to 0.12, n is from 4 to 11, the atomic ratio Co:Fe(III) is from 0.02:1 to 0.13:1 and the molar ratio Ti:Co is between O and 0.08:1.

The present invention provides plate-like composite oxide ferrite particles which:

(i) contain Fe(III), from 6 to 15 atom % of Ba based on the amount of Fe(III), from 4 to 15 atom % of Co based on the amount of Fe(III) and from 4 to 15 atom % of a group (IV) metal selected from Ti, Sn, Zr and Ge based on the amount of Fe(III);

(ii) do not contain Fe(II);

(iii) have an average particle diameter of from 0.01 to 0.3 μm;

(iv) have a temperature stability of from -159 to +159 $Am^{-1}$/°C (-2.0 to +2.0 Oe/°C) at a temperature of from -20 to 70°C;

(v) have a coercive force (Hc) of from 23.9 to 159 $kAm^{-1}$ (300 to 2000 Oe); and

(vi) have a magnetization (σs) of not less than 48 $Am^2$/kg (48 emu/g).

The present invention also provides a process for producing plate-like composite oxide fine ferrite particles as defined above, which process comprises heat-treating at from 750 to 950°C a co-precipitate produced from a ferrous salt, a Ba salt, a salt of Co, a salt of a said group (IV) metal and optionally a ferric salt in an at least equivalent amount of an aqueous alkaline solution based on the total amount of the ferrous salt, ferric salt, Ba salt, Co salt and group (IV) metal salt; the amount of ferrous salt used being from 5 to 100% based on the sum of ferrous and ferric salts (calculated as Fe(II)/[Fe(II) + Fe(III)]).

The present invention further provides a process for producing plate-like composite oxide fine ferrite particles containing Fe, Ba, at least one metal of group (II) selected from Co, Ni, Zn and Mg and at least one metal of group (IV) selected from Ti, Sn, Zr and Ge, which process comprises heat-treating at from 750 to 950°C a co-precipitate produced from a ferrous salt, a Ba salt, a salt of a said group (II) metal, a salt of a said group (IV) metal and optionally a ferric salt in an at least equivalent amount of an aqueous alkaline solution based on the total amount of the ferrous salt, ferric salt, Ba salt, group (II) metal salt and group (IV) metal salt; the amount of ferrous salt used being from 5 to 100% based on the sum of ferrous and ferric salts (calculated as Fe(II)/[Fe(II) + Fe(III)].

The above plate-like composite oxide particles may be prepared by the above process.

Fig. 1 is a graph showing the relation between the amount of ferrous salt added for co-precipitating and the temperature stability of the plate-like composite oxide fine particles containing mainly Ba and Fe. In Fig. 1, curves A and B represent the results obtained when the heat-treatment temperature was 800°C and 970°C, respectively.

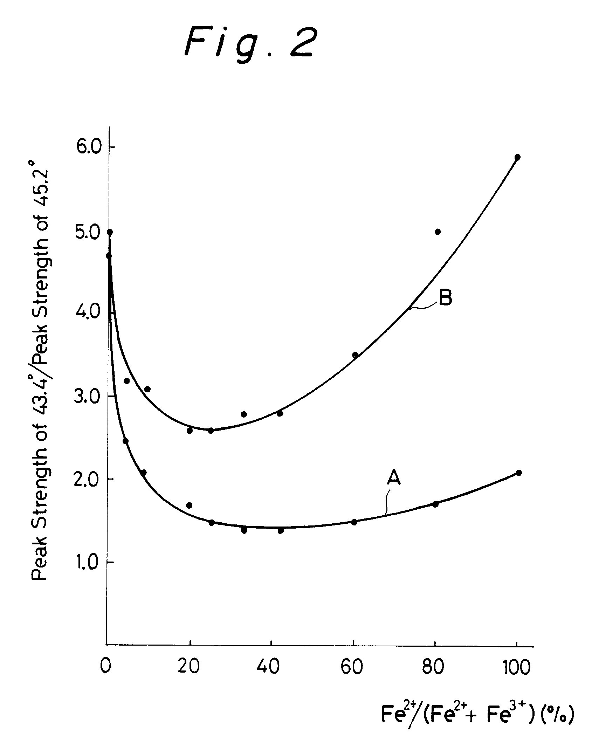

Fig. 2 is a graph showing the relation between the ratio of peak strength at $2\theta = 43.4°$ to that at $2\theta = 45.2°$ when measured by X-ray diffractometry in the plate-like composite oxide fine particles containing mainly Ba and Fe and the amount of ferrous salt added for co-precipitating. In the Fig. 2, curves A and B represent the results obtained when the heat-treatment temperature was 800°C and 970°C, respectively.

Figs. 3 and 4 are X-ray diffraction patterns of the plate-like composite oxide fine particles containing mainly Ba and Fe obtained in Example 1 and Comparative Example 1, respectively. In the Figs. 3 and 4, A indicates a peak at $2\theta = 43.4°$ and B indicates a peak at $2\theta = 45.2°$.

The plate-like composite oxide fine particles of the present invention have improved temperature stability without suffering any restrictions by particle shape or magnetic properties such as magnetization and coercive force, and maintain an adequate coercive force and a high magnetization.

The temperature stability of the plate-like composite oxide fine particles produced by the process of the present invention is preferably -159 to +159 $Am^{-1}/°C$ (-2.0 to +2.0 Oe/°C) at a temperature of from -20 to 70°C.

Fig. 1 shows the relation between the amount of ferrous salt added and the temperature stability of the plate-like composite oxide fine particles containing mainly Ba and Fe which have been obtained in the same way as Example 1 described-later except that the amount of ferrous salt relative to the sum of ferrous and ferric salts is varied from 0 to 100% (calculated as Fe(II)/[Fe(II) + Fe(III)]) and that the heat-treatment temperature is changed to 800°C and 970°C. As seen from Fig. 1, the temperature stability of the plate-like composite oxide fine particles containing mainly Ba and Fe obtained by adjusting the amount of ferrous salt relative the sum of ferrous and ferric salts to from 5 to 100% is not more than 2.0 Oe/°C, and the temperature stability improves as the heat-treatment temperature is lowered.

As seen from Fig. 2, in the case of plate-like composite oxide fine particles containing mainly Ba and Fe, which have improved temperature stability and have been obtained by using ferrous salt in an amount of from 5 to 100% relative to the sum of ferrous and ferric salts in the co-precipitation, the ratio of peak strength at $2\theta = 43.4°$ to that at $2\theta = 45.2°$ is from 1.25:1 to 2.5:1 when measured by X-ray diffractometry using Fe as target.

Examples of the ferrous salt are ferrous nitrate and ferrous chloride.

Examples of the ferric salt are ferric nitrate and ferric chloride.

Examples of the Ba salts are barium hydroxide, barium chloride and barium nitrate.

The metals which are the substituent elements for reducing the coercive force in the present invention, are at least one group (II) metal selected from Co, Ni, Zn and Mg, and at least one group (IV) metal selected from Ti, Sn, Zr and Ge.

Examples of the group (II) metal salt are chlorides, nitrates or acetates of Co, Ni, Zn or Mg. The group (II) metal salt is added in an amount of 4.0 to 15.0 atom%, preferably 5.0 to 12.0 atom%, based on the total amount of Fe (II) and Fe (III). Substantially the whole amount of added group (II) metal is contained in the plate-like composite oxide fine particles containing mainly Ba and Fe. When the content of the group (II) metal salt is less than 4.0 atom%, the coercive force increases and it is difficult to control it to an appropriate value. When the content exceeds 15.0 atom%, the obtained particles have reduced magnetization and are unsuited for use as magnetic particles for magnetic recording.

The group (IV) metal salts usable in the present invention include Ti salts such as titanium tetrachloride and titanyl sulfate, Sn salts such as tin tetrachloride and sodium stannate, Zr salts such as zirconium oxychloride, and Ge salts such as $Na_2GeO_3$. Such a group (IV) metal salt is added in an amount of 4.0 to 15.0 atom%, preferably 5.0 to 12.0 atom%, based on the total amount of Fe (II) and Fe (III). Substantially the whole amount of added group (IV) metal salt is contained in the plate-like composite oxide fine particles containing mainly Ba and Fe. When the content of the group (IV) metal salt is less than 4.0 atom%, the coercive force increases and it is difficult to control it to an appropriate value. When the content exceeds 15.0 atom%, the obtained particles have reduced magnetization and are unsuited for use as magnetic particles for magnetic recording.

The amount of ferrous salt used in the present invention should be from 5 to 100% based on the sum of ferrous and ferric salts (calculated as Fe(II)/[Fe(II) + Fe(III)]). When the amount of ferrous salt is less than 5%, the obtained plate-like composite oxide particles containing mainly Ba and Fe do not have improved temperature stability, and therefore the object of the present invention is not be attained. The amount of ferrous salt is preferably not less than 9% to obtain excellent temperature stability.

The average particle size of the particles obtained is larger as the amount of ferrous salt added increases. To obtain fine particles having an average diameter of less than 0.1 μm, it is preferable that the amount of ferrous salt [Fe(II)/(Fe(II) + Fe(III)] used is 5 to 70%. Taking into consideration the temperature stability and average particle size, the most preferred amount of ferrous salt is 9 to 50%.

Examples of the aqueous alkaline solution used for forming co-precipitates in the present invention are aqueous solutions of NaOH, KOH or $NH_4OH$. The amount of the aqueous alkaline solution used in the present invention is at least equivalent, preferably 1 to 4 equivalents, to the sum of ferrous salt, ferric salt, barium salt, metal (II) salt and metal (IV) salt used in the co-precipitation treatment in the present invention.

The heat-treatment in the present invention can be accomplished either in the presence or in the absence of a flux, but the presence of a flux facilitates production of the plate-like composite oxide fine particles containing mainly Ba and Fe.

Examples of the flux are NaCl, KCl, $BaCl_2$ and sodium orthosilicate. In view of average particle size of the particles to be produced in the present invention, the amount of flux allowed to exist in the system is preferably not less than 5% by weight, more preferably 5 to 100% by weight, based on the amount of co-precipitates. Although suitable particles can be obtained even when the amount of flux used exceeds 100% by weight, it is pointless to use the flux in an excess amount.

The heat-treatment temperature is 750 to 950°C, preferably 790 to 860°C. When the heat-treatment temperature is below 750°C, it is difficult to carry out the reaction for producing the plate-like composite oxide fine particles containing mainly Ba and Fe and hematite may be mixed in the particles. When the temperature exceeds 950°C, it becomes hard to attain an improvement in the temperature stability, which is an object of the present invention. The product obtained by heat-treating at a temperature of 750 to 950°C according to the present invention is pulverized and washed with, for example, water or acids in the usual way.

The plate-like composite oxide fine particles containing mainly Ba and Fe according to the present invention are typified by the facts that they contain no Fe (II) and have an average particle size (diameter) of 0.01 to 0.3 μm, preferably 0.05 to 0.15 μm, a coercive force (Hc) of 300 to 2000 Oe, preferably 700 to 1,200 Oe, a magnetization (σs) of not less than 48 emu/g, preferably not less than 50 emu/g, and a temperature stability (temperature dependence of coercive force) in the temperature range of -20 to 70°C of -2.0 to +2.0 Oe/°C, preferably -1.0 to +1.2 Oe/°C, that the ratio of peak strength at 2 θ = 43.4° to that at 2 θ = 45.2° as measured by X-ray diffractometry is in the range of 1.25:1 to 2.5:1, preferably 1.35:1 to 2.20:1, and that the X-ray diffraction pattern of the particles shows no peak relating to hematite. The particles according to the present invention are further characterized by the fact that Ba is contained in an amount of 6 to 15 atom%, preferably 7 to 13 atom% based on the amount of Fe(III), the group (II) metal is contained in an amount of 4 to 15 atom%, preferably 5 to 12 atom% based on the amount of Fe(III), and the group (IV) metal is contained in an amount of 4 to 15 atom%, preferably 5 to 12 atom%, based on the amount of Fe(III).

As described above, the present invention has realized an improvement in the temperature stability of the particles independently of other matters with no restrictions by particle shape or magnetic properties such as magnetization and coercive force. The plate-like composite oxide fine particles containing mainly Ba and Fe according to the present invention or produced by the process of the present invention have an adequate coercive force, a large magnetization and excellent temperature stability. It is particularly remarkable that the temperature dependence of the coercive force of the particles (temperature stability) in the temperature range of -20 to 70°C is in -2.0 to +2.0 Oe/°C. Thus, the particles according to the present invention or produced by the process of the present invention are best suited for use as magnetic oxide particles for magnetic recording, which are most acutely required at present.

EXAMPLES

The present invention is further described in the following Examples and Comparative Examples.

The average diameter of the particles shown in the following Examples and Comparative Examples is the value determined by electron micrograph.

The magnetization and coercive force of the particles were measured in a powder state in a magnetic field of 10 KOe.

The temperature stability was expressed by a value (in Oe/°C) obtained by dividing the difference between the coercive forces at -20°C and at 70°C by the temperature difference between 70°C and -20°C (viz. 90°C).

## EXAMPLE 1

12.32 mol of $FeCl_3$, 3.08 mol of $FeCl_2$ [equivalent to 20 atom% (calculated as $Fe^{2+}/(Fe^{2+} + Fe^{3+})$)] 1.786 mol of $BaCl_2$, 1.23 mol of $Co(NO_3)_2$ (equivalent to 7.99 atom % of $Co^{2+}$ based on the sum of $Fe^{2+}$ and $Fe^{3+}$), 1.23 mol of $TiCl_4$ (equivalent to 7.99 atom% of $Ti^{4+}$ based on the sum of $Fe^{2+}$ and $Fe^{3+}$) and 55.56 mol of NaOH were mixed and the resultant solution was stirred mechanically for 2 hours, thereby obtaining brown co-precipitates.

After cooling the solution to room temperature, the brown co-precipitates were filtered out, washed well with water and then dried.

To 500 g of the thus obtained brown particles was added an aqueous solution containing 75 g of NaCl and 5 g of $Na_4SiO_4$ (equivalent to 15% by weight of NaCl and 1.0% by weight of $Na_4SiO_4$, respectively, based on the brown particles). Then water was evaporated off and the residue was heat-treated in the atmosphere at 850°C for one hour. The thus obtained product was washed with an aqueous hydrochloric acid solution and water.

The obtained fine particles had an average diameter of 0.06 $\mu$m as determined by observation under an electron microphotograph. These particles also had a coercive force (Hc) of 776 Oe and a magnetization ($\sigma$s) of 53.1 emu/g. The temperature stability was -0.5 Oe/°C in the range of -20°C to 70°C. The result of X-ray diffractometry was as shown in Fig. 3. The ratio of peak strength at 2 $\theta$ = 43.4° to that at 2 $\theta$ = 45.2° was 1.7. Chemical analysis of the particles detected no $Fe^{2+}$ in the particles. In the Fig. 3, A indicates the peak at 2 $\theta$ = 43.4° and B indicates the peak at 2 $\theta$ = 45.2°.

Fluorescent X-ray analysis of the obtained plate-like composite oxide fine particles containing mainly Ba and Fe showed that the content of Ba was 8.8 atom% (calculated as Ba/Fe), the content of Co was 8.0 atom% (calculated as Co/Fe) and the content of Ti was 8.0 atom% (calculated as Ti/Fe).

## EXAMPLES 2 to 7, COMPARATIVE EXAMPLES 1-8

Plate-like composite oxide fine particles containing mainly Ba and Fe were produced in the same way as in Example 1 except that the kind and amount of the ferric salt, the amount of the ferrous salt, the kind and amount of the group (II) metal salt, the kind and amount of the group (IV) metal salt, the kind and amount of the Ba salt, the amount of NaOH, the kind and amount of the flux in the heat-treatment step and the ratio of the flux to the co-precipitates were varied.

The main conditions for production and the properties of the plate-like composite oxide fine particles containing mainly Ba and Fe are shown in Tables 1 and 2.

As determined by X-ray diffractometry of the particles obtained in Comparative Examples 2 and 6, a hematite peak in the diffraction pattern was noted. Accordingly the plate-like composite oxide fine particles containing mainly Ba and Fe were contaminated with hematite.

Table 1

| Examples and Comparative Examples | Co-precipitation Reaction | | | | | | | | | | | | | Amount of NaOH (mol) |
|---|---|---|---|---|---|---|---|---|---|---|---|---|---|---|
| | Ferric salt | | Ferrous salt | | | Metal (II) salt | | | Metal (IV) salt | | | Ba salt | | |
| | Kind | Amount (mol) | Kind | Amount (mol) | $Fe^{2+}/(Fe^{2+}+Fe^{3+})$ (atom %) | Kind | Amount (mol) | $M(II)/(Fe^{2+}+Fe^{3+})$ (atom %) | Kind | Amount (mol) | $M(IV)/(Fe^{2+}+Fe^{3+})$ (atom %) | Kind | Amount (mol) | |
| Example 1 | $FeCl_3$ | 12.32 | $FeCl_2$ | 3.08 | 20 | $Co(NO_3)_2$ | 1.23 | 7.99 | $TiCl_4$ | 1.23 | 7.99 | $BaCl_2$ | 1.786 | 55.56 |
| Example 2 | $Fe(NO_3)_3$ | 10.3 | $FeCl_2$ | 5.1 | 33 | $CoCl_2$ | 1.23 | 7.99 | $TiCl_4$ | 1.23 | 7.99 | $BaCl_2$ | 1.786 | 53.34 |
| Example 3 | $FeCl_3$ | 14.0 | $FeCl_2$ | 1.4 | 9 | $Co(NO_3)_2$ | 1.23 | 7.99 | $TiCl_4$ | 1.23 | 7.99 | $Ba(OH)_2$ | 1.786 | 57.41 |
| Example 4 | $Fe(NO_3)_3$ | 11.55 | $FeCl_2$ | 3.85 | 25 | $Co(NO_3)_2$ | 1.23 | 7.99 | $TiOSO_4$ | 1.23 | 7.99 | $BaCl_2$ | 1.786 | 54.72 |
| Example 5 | $FeCl_3$ | 12.32 | $FeCl_2$ | 3.08 | 20 | $Co(NO_3)_2$ | 1.23 | 7.99 | $TiCl_4$ | 1.23 | 7.99 | $BaCl_2$ | 1.786 | 55.56 |
| Example 6 | $FeCl_3$ | 11.55 | $FeCl_2$ | 3.85 | 25 | $NiCl_2$ $ZnCl_2$ | 1.10 0.65 | 7.14 4.22 | $TiCl_4$ | 1.10 | 7.14 | $BaCl_2$ | 1.54 | 54.72 |
| Example 7 | $Fe(NO_3)_3$ | 10.3 | $FeCl_2$ | 5.1 | 33 | $CoCl_2$ | 1.23 | 7.99 | $TiCl_4$ | 1.23 | 7.99 | $BaCl_2$ | 1.54 | 52.98 |
| Comparative Example 1 | $FeCl_3$ | 12.32 | - | - | - | $Co(NO_3)_2$ | 1.23 | 7.99 | $TiCl_4$ | 1.23 | 7.99 | $BaCl_2$ | 1.786 | 55.56 |
| Comparative Example 2 | $Fe(NO_3)_3$ | 10.3 | $FeCl_2$ | 5.1 | 33 | $CoCl_2$ | 1.23 | 7.99 | $TiCl_4$ | 1.23 | 7.99 | $BaCl_2$ | 1.786 | 53.34 |
| Comparative Example 3 | $FeCl_3$ | 12.32 | $FeCl_2$ | 3.08 | 20 | $Co(NO_3)_2$ | 1.23 | 7.99 | $TiCl_4$ | 1.23 | 7.99 | $BaCl_2$ | 1.786 | 55.56 |
| Comparative Example 4 | $Fe(NO_3)_3$ | 10.3 | $FeCl_2$ | 5.1 | 33 | $CoCl_2$ | 1.23 | 7.99 | $TiCl_4$ | 1.23 | 7.99 | $BaCl_2$ | 1.786 | 53.34 |
| Comparative Example 5 | $FeCl_3$ | 12.32 | $FeCl_2$ | 3.08 | 20 | $Co(NO_3)_2$ | 1.23 | 7.99 | $TiCl_4$ | 1.23 | 7.99 | $BaCl_2$ | 2.772 | 57.59 |
| Comparative Example 6 | $Fe(NO_3)_3$ | 10.3 | $FeCl_2$ | 5.1 | 33 | $CoCl_2$ | 1.23 | 7.99 | $TiCl_4$ | 1.23 | 7.99 | $BaCl_2$ | 0.847 | 51.85 |
| Comparative Example 7 | $FeCl_3$ | 12.32 | $FeCl_2$ | 3.08 | 20 | $Co(NO_3)_2$ | 2.387 | 15.5 | $TiCl_4$ | 2.387 | 15.5 | $BaCl_2$ | 1.786 | 62.53 |
| Comparative Example 8 | $Fe(NO_3)_3$ | 10.3 | $FeCl_2$ | 5.1 | 33 | $CoCl_2$ | 2.387 | 15.5 | $TiCl_4$ | 2.387 | 15.5 | $BaCl_2$ | 1.786 | 48.96 |

EP 0 366 370 B1

Table 2

| Examples and Comparative Examples | Heat-treatment step | | | | Plate-like composite oxide fine particles containing mainly Ba and Fe | | | | | | |
|---|---|---|---|---|---|---|---|---|---|---|---|
| | Flux | | | | Average particle size (μm) | Coercive force (Hc) (Oe) | Magneti-zation (σs) (emu/g) | Tempera-ture Stability (Oe/°C) | Content of Ba (Ba/Fe) (atom%) | Content of M(II) (M(II)/Fe) (atom %) | Content of M(IV) (M(IV)/Fe) (atom %) |
| | Kind | Amount (g) | Flux/co-pre-cipitate (wt%) | Tempera-ture (°C) | | | | | | | |
| Example 1 | NaCl Na$_4$SiO$_4$ | 75 5 | 15 1.0 | 850 | 0.06 | 776 | 53.1 | -0.5 | 8.8 | 8.0 | 8.0 |
| Example 2 | BaCl$_2$ Na$_4$SiO$_4$ | 50 2.5 | 10 0.5 | 800 | 0.06 | 758 | 53.6 | -0.7 | " | " | " |
| Example 3 | NaCl Na$_4$SiO$_4$ | 50 3.75 | 10 0.75 | 800 | 0.06 | 739 | 54.1 | +0.9 | " | " | " |
| Example 4 | BaCl$_2$ Na$_4$SiO$_4$ | 75 5 | 15 1.0 | 850 | 0.07 | 720 | 52.0 | +0.3 | " | " | " |
| Example 5 | - | - | - | 850 | 0.1 | 836 | 54.6 | +1.0 | " | " | " |
| Example 6 | - | - | - | 850 | 0.09 | 920 | 53.0 | -0.8 | 9.2 | Ni/Fe:7.1 Zn/Fe:4.2 | 7.1 |
| Example 7 | NaCl Na$_4$SiO$_4$ | 50 2.5 | 10 0.5 | 800 | 0.06 | 747 | 53.4 | -0.4 | 7.2 | 8.0 | 8.0 |
| Comparative Example 1 | NaCl Na$_4$SiO$_4$ | 75 5 | 15 1.0 | 850 | 0.06 | 588 | 53.9 | +3.9 | 8.8 | 8.0 | 8.0 |
| Comparative Example 2 | BaCl$_2$ Na$_4$SiO$_4$ | 50 2.5 | 10 0.5 | 730 | - | - | - | - | - | - | - |
| Comparative Example 3 | NaCl Na$_4$SiO$_4$ | 75 5 | 15 1.0 | 970 | 0.08 | 934 | 56.5 | +3.1 | 8.8 | 8.0 | 8.0 |
| Comparative Example 4 | BaCl$_2$ Na$_4$SiO$_4$ | 50 2.5 | 10 0.5 | 970 | 0.07 | 885 | 53.6 | +3.0 | 8.8 | 8.0 | 8.0 |
| Comparative Example 5 | NaCl Na$_4$SiO$_4$ | 75 5 | 15 1.0 | 850 | 0.06 | 773 | 45.6 | +0.4 | 15.3 | 8.0 | 8.0 |
| Comparative Example 6 | BaCl$_2$ Na$_4$SiO$_4$ | 50 2.5 | 10 0.5 | 800 | - | - | - | - | - | - | - |
| Comparative Example 7 | NaCl Na$_4$SiO$_4$ | 75 5 | 15 1.0 | 850 | 0.06 | 112 | 53.2 | +0.1 | 8.8 | 15.5 | 15.5 |
| Comparative Example 8 | BaCl$_2$ Na$_4$SiO$_4$ | 50 2.5 | 10 0.5 | 800 | 0.06 | 2520 | 56.0 | -0.3 | 8.8 | 3.2 | 3.2 |

**Claims**

1. Plate-like composite oxide ferrite particles which:
   (i) contain Fe(III), from 6 to 15 atom % of Ba based on the amount of Fe(III), from 4 to 15 atom % of Co based on the amount of Fe(III) and from 4 to 15 atom % of a group (IV) metal selected from Ti, Sn, Zr and Ge based on the amount of Fe(III);
   (ii) do not contain Fe(II);
   (iii) have an average particle diameter of from 0.01 to 0.3 $\mu$m;
   (iv) have a temperature stability of from -159 to +159 $Am^{-1}/°C$ (-2.0 to +2.0 Oe/°C) at a temperature of from -20 to 70°C;
   (v) have a coercive force (Hc) of from 23.9 to 159 $kAm^{-1}$ (300 to 2000 Oe); and
   (vi) have a magnetization ($\sigma s$) of not less than 48 $Am^2/kg$ (48 emu/g).

2. Particles according to claim 1, which have an average particle size of from 0.05 to 0.15 $\mu$m, a coercive force (Hc) of from 23.9 to 95.5 $kAm^{-1}$ (300 to 1200 Oe) and a magnetization ($\sigma s$) of not less than 50 $Am^2/kg$ (50 emu/g).

3. Particles according to claim 1 or 2, wherein the Ba content based on the amount of Fe(III) is from 7 to 13 atom %.

4. Particles according to any one of the preceding claims, which contain from 5 to 12 atom % of Co based on the amount of Fe(III) and from 5 to 12 atom % of the group (IV) metal selected from Ti, Sn, Zr and Ge based on the amount of Fe(III).

5. A process for producing plate-like composite oxide fine ferrite particles as defined in any one of claims 1 to 4, which process comprises heat-treating at from 750 to 950°C a co-precipitate produced from a ferrous salt, a Ba salt, a salt of Co, a salt of a said group (IV) metal and optionally a ferric salt in an at least equivalent amount of an aqueous alkaline solution based on the total amount of the ferrous salt, ferric salt, Ba salt, Co salt and group (IV) metal salt; the amount of ferrous salt used being from 5 to 100% based on the sum of ferrous and ferric salts (calculated as Fe(II)/[Fe(II) + Fe(III)]).

6. A process according to claim 5, wherein the amount of Co salt and the amount of group (IV) metal salt are each independently from 5.0 to 12.0 atom % based on the sum of Fe(II) and Fe(III).

7. A process according to claim 5 or 6, wherein a flux is added for the said heat treatment in an amount of 5 to 100% by weight based on the co-precipitate.

8. A process for producing plate-like composite oxide fine ferrite particles containing Fe, Ba, at least one metal of group (II) selected from Co, Ni, Zn and Mg and at least one metal of group (IV) selected from Ti, Sn, Zr and Ge, which process comprises heat-treating at from 750 to 950°C a co-precipitate produced from a ferrous salt, a Ba salt, a salt of a said group (II) metal, a salt of a said group (IV) metal and optionally a ferric salt in an at least equivalent amount of an aqueous alkaline solution based on the total amount of the ferrous salt, ferric salt, Ba salt, group (II) metal salt and group (IV) metal salt; the amount of ferrous salt used being from 5 to 100% based on the sum of ferrous and ferric salts (calculated as Fe(II)/[Fe(II) + Fe(III)]).

9. A magnetic recording medium in which the magnetic material comprises particles as defined in any one of claims 1 to 4 or which have been produced by a process as claimed in any one of claims 5 to 7.

**Patentansprüche**

1. Plättchenförmige Oxid-Ferrit-Verbundteilchen, welche:
   (i) Fe(III) enthalten, 6 bis 15 Atom-% Ba, bezogen auf die Menge des Fe(III), 4 bis 15 Atom-% Co, bezogen auf die Menge des Fe(III), und 4 bis 15 Atom-% eines Metalls der Gruppe (IV), gewählt aus Ti, Sn, Zr und Ge, bezogen auf die Menge des Fe(III);
   (ii) kein Fe(II) enthalten;
   (iii) einen mittleren Teilchendurchmesser von 0,01 bis 0,3 $\mu$m aufweisen;
   (iv) eine Temperaturstabilität von -159 bis +159 Am-1/°C (-2,0 bis +2,0 Oe/°C) bei einer Temperatur von -20 bis 70 °C aufweisen;

(v) eine Koerzitivkraft (Hc) von 23,9 bis 159 kAm$^{-1}$ (300 bis 2000 Oe) aufweisen; und

(vi) eine Magnetisierung ($\sigma$s) von nicht weniger als 48 Am$^2$/kg (48 emu/g) aufweisen.

2. Teilchen nach Anspruch 1, welche eine mittlere Teilchengröße von 0,05 bis 0,15 µm, eine Koerzitivkraft (Hc) von 23,9 bis 95,5 kAm$^{-1}$ (300 bis 1200 Oe) und eine Magnetisierung ($\sigma$s) von nicht weniger als 50 Am$^2$/kg (50 emu/g) aufweisen.

3. Teilchen gemäß Anspruch 1 oder 2, wobei der Ba-Gehalt, bezogen auf die Menge des Fe(III) 7 bis 13 Atom-% beträgt.

4. Teilchen nach einem der vorangehenden Ansprüche, welche 5 bis 12 Atom-% Co enthalten, bezogen auf die Menge des Fe(III) und 5 bis 12 Atom-% des Metalls der Gruppe (IV), gewählt aus Ti, Sn, Zr und Ge, bezogen auf die Menge des Fe(III).

5. Verfahren zur Herstellung plättchenförmiger, feiner Oxid-Ferrit-Verbundteilchen, wie in einem der Ansprüche 1 bis 4 definiert, wobei das Verfahren umfaßt:
Wärmebehandeln eines Kopräzipitats, hergestellt aus einem Eisen(II)-Salz, einem Ba-Salz, einem Co-Salz, einem Salz der Metalle der Gruppe (IV) und wahlweise einem Eisen(III)-Salz in einer wenigstens äquivalenten Menge einer wäßrigen, alkalischen Lösung, bezogen auf die Gesamtmenge des Eisen(II)-Salzes, des Eisen(III)-Salzes, des Ba-Salzes, des Co-Salzes und des Salzes des Metalls der Gruppe (IV) bei 750 bis 950 °C; wobei die Menge des verwendeten Eisen(II)-Salzes 5 bis 100 %, bezogen auf die Summe der Eisen(II)und Eisen(III)-Salze (berechnet als Fe(II)/[Fe(II) + Fe(III)], beträgt.

6. Verfahren nach Anspruch 5, wobei die Menge des Co-Salzes und die Menge des Salzes des Metalls der Gruppe (IV) jeweils unabhängig voneinander 5,0 bis 12 Atom-%, bezogen auf die Summe von Fe(II) und Fe(III), beträgt.

7. Verfahren nach Anspruch 5 oder 6, wobei ein Flußmittel für die Wärmebehandlung in einer Menge von 5 bis 100 Gew.-%, bezogen auf das Kopräzipitat, hinzugefügt wird.

8. Verfahren zur Herstellung plättchenförmiger, feiner Oxid-Ferrit-Verbundteilchen, enthaltend Fe, Ba, wenigstens ein Metall der Gruppe (II), gewählt aus Co, Ni, Zn und Mg und wenigstens ein Metall der Gruppe (IV), gewählt aus Ti, Sn, Zr und Ge, wobei das Verfahren umfaßt:
Wärmebehandeln eines Kopräzipitats, hergestellt aus einem Eisen(II)-Salz, einem Ba-Salz, einem Salz eines Metalls der Gruppe (II), einem Salz eines Metalls der Gruppe (IV) und wahlweise einem Eisen(III)-Salz in einer wenigstens äquivalenten Menge einer wäßrigen, alkalischen Lösung, bezogen auf die gesamte Menge des Eisen(II)-Salzes, des Eisen(III)-Salzes, des Ba-Salzes, des Salzes des Metalls der Gruppe (II) und des Salzes des Metalls der Gruppe (IV) bei 750 bis 950 °C; wobei die Menge des verwendeten Eisen(II)-Salzes 5 bis 100 %, bezogen auf die Summe der Eisen(II)- und Eisen(III)-Salze, berechnet als Fe(II)/[Fe(II) + Fe(III)], beträgt.

9. Magnetisches Aufzeichnungsmaterial, wobei das magnetische Material Teilchen umfaßt, die in einem der Ansprüche 1 bis 4 definiert sind oder welche gemäß eines Verfahrens nach einem der Ansprüche 5 bis 7 hergestellt wurden.

**Revendications**

1. Particules de type ferrite d'oxyde composite sous forme de plaquettes, qui :

(i) contiennent du Fe(III), de 6 à 15% en atomes de Ba par rapport à la quantité de Fe(III), de 4 à 15% en atomes de Co par rapport à la quantité de Fe(III) et de 4 à 15% en atomes d'un métal du groupe (IV) choisi parmi Ti, Sn, Zr et Ge par rapport à la quantité de Fe(III);

(ii) ne contiennent pas de Fe(II);

(iii) ont un diamètre particulaire moyen de 0,01 à 0,3 µm;

(iv) ont une stabilité à la température allant de -159 à +159 Am$^{-1}$/°C (-2,0 à +2,0 Oe/°C), à une température de -20 à 70°C;

(v) ont une force coercitive (Hc) allant de 23,9 à 159 kAm$^{-1}$ (300 à 2000 Oe); et

(vi) ont une magnétisation ($\sigma$s) d'au moins 48 Am$^2$/kg (48 ému/g).

2.  Particules suivant la revendication 1, qui ont une dimension particulaire moyenne comprise entre 0,05 et 0,15 μm, une force coercitive (Hc) de 23,9 à 95,5 kAm$^{-1}$ (300 à 1200 Oe) et une magnétisation ($\sigma$s) d'au moins 50 Am$^2$/kg (50 ému/g).

3.  Particules suivant les revendications 1 ou 2, dans lesquelles la teneur en Ba est de 7 à 13% en atomes par rapport à la quantité de Fe(III).

4.  Particules suivant l'une quelconque des revendications précédentes, qui contiennent de 5 à 12% en atomes de Co par rapport au Fe(III) et de 5 à 12% en atomes d'un métal du groupe (IV) choisi parmi Ti, Sn, Zr et Ge par rapport à la quantité de Fe(III).

5.  Procédé pour la production de particules de type ferrite d'oxyde composite sous forme de plaquettes suivant l'une quelconque des revendications 1 à 4, qui comprend un traitement à chaud effectué à une température de 750 à 950°C, d'un co-précipité produit à partir d'un sel ferreux, d'un sel de Ba, d'un sel de Co, d'un sel de ce métal du groupe (IV) et éventuellement d'un sel ferrique dans une quantité au moins équivalente d'une solution alcaline aqueuse par rapport à la quantité totale de sel ferreux, de sel ferrique, de sel de Ba, de sel de Co et de sel du métal du groupe (IV); la quantité de sel ferreux utilisée étant de 5 à 100% par rapport à la somme des quantités de sels ferreux et ferrique (calculés en tant que Fe(II) / [Fe(II) + Fe(III)]).

6.  Procédé suivant la revendication 5, dans lequel la quantité de sel de Co et la quantité de sel du métal du groupe (IV) sont chacune, de facon indépendante, comprise entre 5,0 et 12,0% en atomes par rapport à la somme de Fe(II) et de Fe(III).

7.  Procédé suivant les revendications 5 ou 6, dans lequel un fondant est ajouté pour ce traitement à chaud, en une quantité de 5 à 100% en poids par rapport au co-précipité.

8.  Procédé pour la production de particules de type ferrite d'oxyde composite sous forme de plaquettes contenant Fe, Ba, au moins un métal du groupe (II) choisi parmi Co, Ni, Zn et Mg et au moins un métal du groupe (IV) choisi parmi Ti, Sn, Zr et Ge, qui comprend un traitement à chaud effectué à une température de 750 à 950°C, d'un co-précipité produit à partir d'un sel ferreux, d'un sel de Ba, d'un sel d'un métal de ce groupe (II), d'un sel d'un métal de ce groupe (IV) et éventuellement d'un sel ferrique dans une quantité au moins équivalente d'une solution alcaline aqueuse par rapport à la quantité totale de sel ferreux, de sel ferrique, de sel de Ba, de sel d'un métal du groupe (II) et de sel d'un métal du groupe (IV); la quantité de sel ferreux utilisée étant de 5 à 100% par rapport à la somme des quantités des sels ferreux et ferrique (calculés en tant que Fe(II) / [Fe(II) + Fe(III)]).

9.  Milieu pour l'enregistrement magnétique, dans lequel le matériau magnétique comprend des particules suivant l'une quelconque des revendications 1 à 4 ou qui ont été produites par un procédé suivant l'une quelconque des revendications 5 à 7.

11

# F i g . 1

# Fig. 2

## Fig. 3

## Fig. 4